# EUROPÄISCHE PATENTSCHRIFT

(11) **EP 3 241 420 B1**
(45) Veröffentlichungstag und Bekanntmachung des Hinweises auf die Patenterteilung: **20.03.2019**
(21) Anmeldenummer: 17401045.4
(22) Anmeldetag: 27.04.2017
(51) Int. Cl.: A01C 17/00, A01C 21/00

(54) **STEUERSYSTEM FÜR EINE LANDWIRTSCHAFTLICHE MASCHINE UND VERFAHREN**
CONTROL SYSTEM FOR AN AGRICULTURAL MACHINE AND METHOD
SYSTÈME DE COMMANDE DE MACHINE AGRICOLE ET PROCÉDÉ

(30) Priorität: 03.05.2016 DE 102016108176
(43) Veröffentlichungstag der Anmeldung: 08.11.2017
(73) Patentinhaber: Amazonen-Werke H. Dreyer GmbH & Co. KG, 49205 Hasbergen (DE)
(72) Erfinder: Wessels, Thomas, 49080 Osnabrück (DE); Große Brinkhaus, Andre, 48149 Münster (DE)

(56) Entgegenhaltungen:
- EP-A1- 2 198 683
- EP-A1- 2 556 738
- EP-A1- 2 689 649
- EP-A1- 3 017 679
- EP-A2- 2 777 376
- DE-A1- 19 723 359
- DE-A1-102014 102 645

## Beschreibung

Die Erfindung betrifft ein Steuersystem für eine landwirtschaftliche Maschine zur Ausbringung von landwirtschaftlichem Gut und ein entsprechend ausgebildetes Verfahren.

Die DE 102013103060 A1 zeigt ein Sensorsystem für einen Schleuderstreuer, welches aus einer Mehrzahl von Radarsensoren besteht, welche konzentrisch um das Zentrum einer oder beider Schleuderscheiben des Düngerstreuers angeordnet sind. Die Sensoren dienen zur Erfassung des ausgebrachten Streugutes, so dass aus den Sensordaten auf die Querverteilung des mit der jeweiligen Schleuderscheibe ausgebrachten Gutes, insbesondere den mittleren Abwurfwinkel, zurückgeschlossen werden kann. Die Detektion der Streugutpartikel erfolgt vorzugsweise mittels Radarstrahlen.

Die EP 2 777 376 A2 zeigt ein Verfahren zur Ausbringung von Streugut. Dabei sind funktionale Abhängigkeiten zwischen Einstellparametern des Schleuderstreuers und Abwurfparametern hinterlegt. Mittels Sensoren wird die Ausbringung überwacht und mit einer Regeleinheit werden Ist- und Sollwerte abgeglichen. Bei einer einen Maximalwert übersteigenden Abweichung erfolgt eine Nachregelung der Einstellparameter.

Die nachveröffentlichte EP 3 017 679 A1 offenbart ein Verfahren zur Bestimmung der Geschwindigkeit und/oder Wurfweite von abgeworfenem Streugut sowie eine Verteilmaschine zur Durchführung eines solchen Verfahrens.

Als Parameter zur Charakterisierung von Streubildern einer Streuscheibe (auch Schleuderscheibe) eignen sich insbesondere die mittlere Wurfweite WW und der mittlere Abwurfwinkel AWW des Düngeraustrags. Diese Werte werden im Stand der Technik für verschiedene Arbeitsbreiten AB und für unterschiedliche Düngersorten in Laborversuchen zur Streutabellenerstellung ermittelt. Je nach Bedingung werden einer oder mehrere dieser Werte an einer Bedienstation zu Beginn des Arbeitsbetriebes eingegeben. Je nach konkreter Umsetzung kann hierbei die Eingabe in Form der Wurfweite und/ oder Wurfrichtung oder entsprechender Kennwerte oder sonstiger Parameter erforderlich sein. Die mittleren Abwurfwinkel AWW und Wurfweiten WW werden beispielsweise als 50%-Perzentil einer in Umfangsrichtung zum Streuscheibenmittelpunkt gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedlichen Stellungen eines an der Streuscheibe ausgebildeten Einleitsystems für Dünger ermittelt. Die für bestimmte Arbeitsbreiten und Düngersorten unter Standardbedingungen einzustellenden Stellungen und Drehzahlen werden dann üblicherweise in Streutabellen aufgelistet.

Die Steuerung der Verteilung des Schleuderstreuers wird durch ein Steuersystem auf Basis der eingegeben Daten geregelt. Dies können die für den jeweiligen Düngertyp ermittelten Streuparameter sein, die Wurfweite, die verwendete Streuscheibe oder sonstige Parameter. Diese spielen insbesondere bei der Berechnung von Ein- und Ausschaltpunkten der Düngerverteilung bei der Fahrt aus dem Feldinneren in ein Vorgewende oder bei der Fahrt aus dem Vorgewende in das Feldinnere eine Rolle. Hierbei soll nämlich das Vorgewende möglichst nicht schon bei der Bearbeitung des Feldinneren mit Dünger beaufschlagt werden. Das Vorgewende wird nämlich typischerweise vor oder nach der Bearbeitung des Feldinneren separat mit Streugut versorgt. Es soll vielmehr möglichst exakt und trennscharf an der Grenze zwischen Feldinnerem und Vorgewende die Verteilung gestoppt werden, so dass das Feldinnere möglichst vollständig und das Vorgewende möglichst wenig mit Streugut beaufschlagt wird. Hierfür ist in der DE102009051972 A1 vorgesehen, dass neben der Arbeitsbreite die mittlere Wurfweite eingegeben und der jeweilige Abstand zwischen Feldgrenze am Vorgewende und der Streuscheibenmitte bestimmt wird, so dass hieraus die optimalen Aus- und Einschaltpunkte ermittelt werden können.

Nachteilig im Stand der Technik ist, dass die sich aus der aktuellen Wurfweite ergebenden Einstellparameter, wie beispielsweise Anpassung einer Schleuderscheibendrehzahl zur Einstellung der Sollarbeitsbreite oder die Position der Ein- und Ausschaltpunkte bei der Fahrt aus dem Vorgewende in das Feldinnere oder bei der Fahrt aus dem Feldinneren in das Vorgewende durch die Eingabe verschiedenen Parametern, wie die aus einer Streutabelle abgelesene Düngersorte oder die mittlere Wurfweite, ermittelt werden müssen. Zudem können diese Parameter nur einen ungefähren Wert darstellen, da beispielsweise die Wurfweite insbesondere durch äußere Einflüsse wie Wind, beeinflusst sein kann oder sich das Streuverhalten einer spezifischen Düngersorte je nach Eigenschaften der verwendeten Charge (Feuchtigkeit, Partikelgröße etc.) verändern kann.

Aufgabe der vorliegenden Erfindung ist es ein Steuersystem und ein Verfahren bereitzustellen, welches die Nachteile des Standes der Technik behebt.

Diese Aufgabe wird in erfindungsgemäßer Weise durch die Ansprüche 1 und 9 gelöst. Ein Steuersystem ist konfiguriert, Regelparameter die Verteilung betreffend, wie Drehzahl der Schleuderscheibe und/oder einen Sollwert für den mittleren Abwurfwinkel des Streugutes von der Streuscheibe in Reaktion auf die Messsignale des zumindest einen ersten Sensors zur berührungslosen Erfassung der Wurfweite und der gewünschten Arbeitsbreite anzupassen. Es ist mithin also eine Sollarbeitsbreite in dem erfindungsgemäßen Steuersystem hinterlegt. Dieser Sollarbeitsbreite wird durch das Steuersystem eine Sollwurfweite und ein korrespondierender Abwurfwinkel zugeordnet, um die eingestellte Sollarbeitsbreite zu erreichen. Die eingestellten Werte können von der verwendeten Streugutsorte abhängen. Es wird nun die aktuelle tatsächliche Wurfweite mittels eines berührungslos arbeitenden Sensors überwacht und bei Abweichungen der tatsächlich ermittelten Wurfweite von der gewünschten Sollwurfweite wird letztere entsprechend angepasst oder, wenn dies beispielsweise wegen einer Begrenzung der Schleuderscheibendrehzahl nicht möglich ist, der Sollwert für den Abwurfwinkel derart angepasst, dass die Sollarbeitsbreite erreicht wird. In Reaktion hierauf wird vorzugsweise der Aufgabepunkt des Streugutes auf die Schleuderscheibe entsprechend des veränderten Sollwertes für den Abwurfwinkel angepasst. Die tatsächliche Arbeitsbreite, ist also bestimmt durch die Wurfweite und den Abwurfwinkel.

Falls zum Erreichen der gewünschten Arbeitsbreite notwendig, kann also vorgesehen sein, dass der Sollwert für den mittleren Abwurfwinkel durch das Steuersystem angepasst, also zur Erhöhung der tatsächlichen Arbeitsbreite beispielsweise nach außen verlagert wird. Entsprechend wird dann typischerweise der Aufgabepunkt des Düngers auf die Schleuderscheibe angepasst. Umgekehrt kann vorgesehen sein, den Sollabwurfwinkel weiter nach innen zu verlagern, falls die derzeit gemessene Wurfweite auf eine im Verhältnis zur gewünschten Arbeitsbreite zu große tatsächliche Arbeitsbreite schließen lässt. Hierdurch kann eine vorteilhaftere Verteilcharakteristik hin zu einer mehr dreiecksförmigen Verteilcharakteristik bezüglich der Querverteilung des Streugutes erreicht werden. Dies führt zu einer flacher abfallenden Verteilmenge von der Mitte des Schleuderstreuers nach außen betrachtet. Hierdurch kommt es beispielsweise bei Fahrfehlern, Windböen oder Veränderungen der Düngereigenschaften zu geringeren Abweichungen von der Sollausbringmenge im Überlappungsbereich benachbarter Fahrspuren.

Bei dem ersten Sensor handelt es sich um einen oder mehrere Radarsensoren, welche im oberen Bereich des Schleuderstreuers angebracht sind und die abgeworfenen Streugutpartikel mit Radarwellen bestrahlen. Die reflektierten Wellen werden erfasst und nach ihrer Frequenz ausgewertet. Aus der Dopplerverschiebung der reflektierten Radarwellen lässt sich auf die Geschwindigkeit der Streugutpartikel und damit auf die Wurfweite schließen.

Es kann vorgesehen sein, dass jeder Schleuderscheibe des Schleuderstreuers ein separater Sensor zur Bestimmung der Wurfweite zugeordnet ist. Bei nur einem Sensor kann unter Annahme einer symmetrischen Verteilung die Wurfweite der zweiten Schleuderscheibe bei gleicher Drehzahl der der ersten Schleuderscheibe entsprechen.

In einer vorteilhaften Weiterbildung der Erfindung verfügt das Steuersystem über ein Positionserfassungssystem, wobei bei der Verteilung zwischen einem Innenbereich der landwirtschaftlichen Fläche und zumindest einem äußeren Bereich, dem sogenannten Vorgewende, unterschieden wird, wobei letzterer für den Wendevorgang zwischen der Bearbeitung von zwei im Innenbereich liegenden Fahrspuren verwendet wird, wobei die Bearbeitung zumindest eines Bereiches des Vorgewendes vor oder nach der Bearbeitung des Innenbereiches stattfindet und wobei das Steuersystem konfiguriert ist, die Positionen an denen die Verteilung bei der Fahrt ins Vorgewende vor oder zu Beginn des Wendevorganges gestoppt (Ausschaltpunkte) und die Positionen an denen die Verteilung bei der Fahrt aus dem Vorgewende nach oder zum Ende des Wendevorganges wieder gestartet wird (Einschaltpunkte) auf der Basis der jeweils vor dem Ausschalten mittels des zumindest einen Sensors ermittelten Wurfweite zu bestimmen.

Das Feld wird also in zumindest einen inneren Bereich des Feldes und einen Vorgewendebereich unterteilt, wobei der innere Bereich des Feldes vor oder nach dem Vorgewendebereich bearbeitet wird und wobei der Vorgewendebereich typischerweise dafür vorgesehen ist zwischen der Bearbeitung von zwei Fahrspuren des inneren Feldbereiches einen Wendevorgang durchzuführen. Die Breite des Vorgewendebereiches ist in der Regel von der Größenordnung einer oder weniger Arbeitsbreiten des Schleuderstreuers. Während des Wendevorganges wird in der Regel kein Streugut ausgebracht, so dass das Vorgewende während eines separaten Arbeitsprozesses mit Streugut bestreut wird. Um nun möglichst exakt die Verteilung des Streugutes am Übergang zwischen dem inneren Bereich des Feldes und dem Vorgewende an- und abzuschalten ist vorgesehen, dass die jeweils unmittelbar vor dem Einfahren in das Vorgewende mittels des ersten Sensors bestimmte Wurfweite verwendet wird, um die Ein- und Ausschaltpunkte des Verteilvorganges beim Übergang Feldinnenbereich - Vorgewende zu berechnen. Die unmittelbar vor dem Einfahren bestimmte Wurfweite kann hierbei auch ein Mittelwert mehrerer Messwerte der Wurfweite sein. Es wird jedoch jeweils der aktuell gültige Wert der Wurfweite für die Berechnung verwendet. Beim Ausfahren aus dem Vorgewende in das Feldinnere soll der Einschaltpunkt der Verteilung berechnet werden. Hier findet also unmittelbar vor dem Einschaltvorgang keine Verteilung statt. Es kann also keine Wurfweite ermittelt werden. Der aktuell gültige Wert der Wurfweite ist in diesem Fall die Wurfweite der zuletzt bearbeiteten Fahrspur, wobei der Wert der Wurfweite natürlich unter Berücksichtigung sonstiger Einstellparameter, wie Schleuderscheibendrehzahl, zu betrachten ist.

Die Berechnung der Ein- und Ausschaltpunkte wird dabei durch einen Algorithmus, welcher in dem Steuersystem hinterlegt ist, durchgeführt. Da in der Regel bei der Arbeit mit Schleuderstreuern überlappend gearbeitet wird, die meisten Orte des Feldes also zumindest zweimal mit Streugut bestreut werden, kann es für eine möglichst gleichmäßige Verteilung des Streugutes im Übergangsbereich feldinnerer Bereich - Vorgewende vorgesehen sein, dass die Ausschalt-/ Einschaltpunkte so gewählt werden, dass noch Streugut bei der Bearbeitung des feldinneren Bereiches in das Vorgewende hineingeworfen wird. Es soll jedoch auch in diesem Fall der jeweilige Ein- und Ausschaltpunkt möglichst exakt berechnet werden.

Der Schleuderstreuer verfügt ferner über zumindest einen zweiten Sensor, vorzugsweise Radarsensor, zur berührungslosen Charakterisierung mindestens eines Parameters der Verteilcharakteristik, wie vorzugsweise Wurfrichtung und/oder mittlerer Abwurfwinkel, des Schleuderstreuers, wobei das Steuersystem konfiguriert ist, auf der Basis der Messwerte des zweiten Sensors den Aufgabepunkt des Streugutes auf die Schleuderscheibe in der Weise anzupassen, dass der mittels der Messwerte des ersten Sensors bestimmte Sollwert für den mittleren Abwurfwinkel eingestellt wird. Es wird also die mittels des ersten Sensors bestimmte Wurfweite verwendet um den Sollwert des Abwurfwinkels und eine gewünschte Sollarbeitsbreite zu erreichen. Hierfür ist nun vorgesehen, dass der aktuelle Abwurfwinkel mittels des zweiten Sensors bestimmt und entsprechend der Messwerte des zweiten Sensors der Sollwert für den Abwurfwinkel eingestellt wird.

In einer vorteilhaften Weiterbildung werden die Ein- und/oder Ausschaltpunkte zusätzlich anhand der eingegebenen Sollarbeitsbreite und/oder anhand der tatsächlich mittels des ersten und/oder zweiten Sensors bestimmten Arbeitsbreite durch das Steuersystem ermittelt werden. Auf diese Weise können die Ein- und Ausschaltpunkte noch präziser berechnet werden, so dass sich eine bessere Überlappung der Streufächer von Vorgewende und Feldinnerem ergibt.

Bei dem zweiten Sensor handelt es sich um einen oder mehrere Radarsensoren, welche in der Nähe der Schleuderscheiben angeordnet sind und den Streufächer von unten oder oben mit Radarstrahlen beaufschlagen. Aus der Amplitude der reflektierten Radarwellen lassen sich Rückschlüsse über die am Ort der Messung ausgebrachte Düngermenge ziehen. Bei mehreren Sensoren, welche ringförmig um die Schleuderscheibe angeordnet sind oder bei einem oder mehreren beweglichen Sensoren, welche ringförmig in Umfangsrichtung um den Schleuderstreuer bewegt werden, lässt sich so beispielsweise der mittlere Abwurfwinkel aus einem Vergleich der Messsignale an in Umfangsrichtung der Scheibe unterschiedlichen Orten ableiten.

In einer möglichen Ausgestaltung der Erfindung ist der zumindest eine zweite Sensor in der Nähe der Schleuderscheibe angeordnet und werden die abgeworfenen Düngerkörner direkt nach dem Abwurf der Düngerkörner von der Schleuderscheibe, vorzugsweise in einem Abstand von nicht mehr als 0,7 m von der Schleuderscheibe, detektiert. Der zumindest eine erste Sensor ist an der Außenwand des Behälters in der oberen Hälfte angebracht und die Düngerkörner werden von diesem Sensor in einem weiteren Abstand von der Schleuderscheibe von vorzugsweise mehr als 2 m detektiert. Hierdurch kann besonders vorteilhaft einerseits die Querverteilung der Düngerkörner, insbesondere der mittlere Abwurfwinkel, mittels des zweiten Sensors detektiert werden während andererseits mit dem ersten Sensor die Wurfweite separat ermittelt wird. Der zweite Sensor umfasst hierbei vorzugsweise zumindest einen beweglichen Sensor, welcher in Umfangsrichtung konzentrisch zu der jeweiligen Schleuderscheibe, welcher der Sensor zugeordnet ist, verschwenkt werden kann oder mehrere Sensoren als Sensorsystem, welche im Abwurfbereich der jeweiligen Schleuderscheibe des Schleuderstreuers konzentrisch um die Schleuderscheibe stationär angeordnet sind. Diese zweiten Sensoren sind in geringem Abstand von der Schleuderscheibe angebracht, da in diesem Bereich die Auffächerung des Streufächers noch nicht so stark ist. Aus den Sensordaten kann die Wurfrichtung, beispielsweise anhand des mittleren Abwurfwinkels, ermittelt werden.

Eine Wurfweitenermittlung ist mittels dieses zweiten Sensors oder Sensorsystems aufgrund seiner Lage in der Nähe der Schleuderscheiben nur schwer möglich. Der Grund ist einerseits, dass sich in unmittelbarer Nähe der Schleuderscheibe die Flugeigenschaften des Düngers kaum auf die Geschwindigkeit der Partikel ausgewirkt haben. Außerdem werden die Streugutpartikel durch das zweite Sensorsystem typischerweise direkt von unten oder oben mit Radarstrahlen beaufschlagt, so dass sich aus den gemessenen Radarstrahlen kein Dopplersignal extrahieren lässt, welches zur Geschwindigkeitsbestimmung in Wurfrichtung, welche annähernd senkrecht zur Ausbreitungsrichtung der Radarstrahlen des ersten Sensorsystems verläuft, geeignet wäre. Zur Wurfweitenermittlung ist daher ein erster Sensor oder ein erstes Sensorsystem vorgesehen, welches weiter oben am Schleuderstreuer angebracht ist und die Düngerpartikel derselben Schleuderscheibe zu einem späteren Zeitpunkt der Flugbewegung mit Radarstrahlen beaufschlagt. Zu diesem späteren Zeitpunkt der Flugbewegung haben sich die Flugeigenschaften der Streugutpartikel bereits signifikant auf die Bewegungsgeschwindigkeit ausgewirkt, so dass eine Prognose des weiteren Verlaufes der Flugbahn möglich ist. Zudem ist auf Grund des flacheren Messwinkels im Vergleich zur Flugbahn mit dem ersten Sensor oder dem ersten Sensorsystem auch eine Geschwindigkeitsermittlung aus dem Dopplersignal der Radarmessung möglich.

In einer vorteilhaften Weiterbildung der Erfindung ist zusätzlich der Schleuderscheibentyp an das Steuersystem übergebbar und/oder in dieses eingebbar und wird dieser bei der Ermittlung der Einstellparameter durch das Steuersystem berücksichtigt. Zwar können Einflüsse von verschiedenen Schleuderscheiben durch das erfindungsgemäße Steuersystem auch automatisch ermittelt werden, jedoch sind die Einflüsse, die die Schleuderscheiben auf die Verteilcharakteristik haben, vergleichsweise hoch, so dass eine Berücksichtigung der Verteileigenschaften durch die jeweils verwendete Schleuderscheibe vorteilhaft sein kann. Um die für die jeweilige Schleuderscheibe notwendigen Einstellparameter besser ermitteln zu können, ist also vorgesehen, dass der Typ der jeweiligen Schleuderscheibe in das Steuersystem eingebbar ist, so dass die schleuderscheibenspezifischen Einstellparameter durch das Steuersystem berechnet werden können.

In einer alternativen Ausgestaltung der Erfindung wird der Schleuderscheibentyp mittels zumindest eines dritten Sensors vorzugsweise berührungslos ermittelt und dieser dann bei der Ermittlung der Einstellparameter durch das Steuersystem berücksichtigt. Auf diese Weise kann auch die Eingabe der jeweils verwendeten Schleuderscheibe eingespart werden.

In einer vorteilhaften Weiterbildung der Erfindung wird die aktuelle Ausbringmenge mittels zumindest eines vierten Sensors separat und/oder ergänzend ermittelt, vorzugsweise mittels einer Wiegeeinrichtung zur Bestimmung der im Behälter befindlichen Düngermasse und/oder eines Sensors zur Messung des zum Antrieb der Scheibe notwendigen Drehmomentes und die Ausbringmenge wird bei der Ermittlung der Einstellparameter durch das Steuersystem berücksichtigt. Rückschlüsse über die ausgebrachte Düngermenge lassen sich aus den Messsignalen der ersten und/oder zweiten Sensoren ableiten. Diese Messwerte sind jedoch, was die ausgebrachte Menge anbelangt fehlerbehaftet, beispielsweise weil die empfangenen Signale von den Materialeigenschaften des ausgebrachten Streugutes abhängen. Eine exaktere Bestimmung der Ausbringmenge ist möglich, indem über eine Wiegeeinrichtung die Veränderung der Düngermasse im Vorratsbehälter des Schleuderstreuers direkt erfasst wird. Alternativ oder zusätzlich kann die Ausbringmenge indirekt erfasst werden, indem das für die Verteilung aufzuwendende Drehmoment der Schleuderscheiben gemessen wird. Die Differenz zwischen dem Leerlaufdrehmoment der Schleuderscheiben und dem aktuell aufzuwendenden Drehmoment ist hierbei proportional zu der ausgebrachten Streugutrate. Die entsprechenden Messsignale können nun vorteilhaft durch das Steuersystem verwendet werden, um eine (exaktere) Regelung der Ausbringmenge bzw. der Ausbringrate zu ermöglichen.

In einer vorteilhaften Weiterbildung der Erfindung wird der Windeinfluss auf die Düngerverteilung mittels eines separaten fünften Sensors bestimmt und/oder die Einstellparameter entsprechend des Windeinflusses durch das Steuersystem angepasst. Der Windeinfluss kann auch aus den gewonnenen Messdaten des ersten und/oder zweiten Sensors ermittelt werden. Insbesondere bei Seitenwind wird eine Abweichung des gemessenen Abwurfwinkels vom Sollabwurfwinkel ermittelt. Jedoch ist der Einfluss auf das Streugut in der Nähe der Streuscheibe, wo sich der erste Sensor oder das erste Sensorsystem befindet begrenzt. Genauer und schneller lässt sich der negative Einfluss von Wind, insbesondere Seitenwind, mittels eines separaten Windsensors, beispielsweise eines Anemometers, bestimmen und direkt durch das Steuersystem berücksichtigen.

Es wird zudem ein Verfahren zur Steuerung eines Schleuderstreuers bereitgestellt, wobei Regelparameter die Verteilung betreffend, wie Drehzahl der Schleuderscheibe und/oder ein Sollwert für den mittleren Abwurfwinkel des Streugutes von der Streuscheibe in Reaktion auf die Messsignale des zumindest einen ersten Sensors und der gewünschten Arbeitsbreite angepasst werden. Es wird also ein erster Sensor verwendet, um die aktuelle Wurfweite des Streugutes zu ermitteln. Aus diesem Wert werden entsprechend des erfindungsgemäßen Verfahrens zur Anpassung der tatsächlichen Wurfweite, um den hinterlegten Sollwert für die Arbeitsbreite zu erreichen, Regelparameter des Schleuderstreuers eingestellt. Dies kann beispielsweise die Drehzahl der Schleuderscheiben, oder der Sollwert für den mittleren Abwurfwinkel sein.

In einer besonders bevorzugten Weiterbildung des Verfahrens wird bei der Verteilung zwischen einem Innenbereich der landwirtschaftlichen Fläche und zumindest einem äußeren Bereich, dem sogenannten Vorgewende unterschieden, wobei letzterer für den Wendevorgang zwischen der Bearbeitung von zwei im Innenbereich liegenden Fahrspuren verwendet wird, wobei die Bearbeitung zumindest eines Bereiches des Vorgewendes vor oder nach der Bearbeitung des Innenbereiches stattfindet und wobei die Positionen an denen die Verteilung bei der Fahrt ins Vorgewende vor oder zu Beginn des Wendevorganges gestoppt (Ausschaltpunkte) und die Positionen an denen die Verteilung bei der Fahrt aus dem Vorgewende nach oder zum Ende des Wendevorganges wieder gestartet wird (Einschaltpunkte) auf der Basis der jeweils vor dem Ausschalten mittels des zumindest einen ersten Sensors ermittelten Wurfweite unter Zugriff auf Daten eines Positionserfassungssystems bestimmt werden. Es wird also gemäß des Verfahrens die ermittelte aktuelle Wurfweite verwendet, um beim Übergang vom Innenbereich der landwirtschaftlichen Fläche in das Vorgewende den Ausschaltpunkt der Verteilung oder umgekehrt bei der Fahrt vom Vorgewende in den Innenbereich der landwirtschaftlichen Fläche die ermittelte aktuelle Wurfweite verwendet, um den Einschaltpunkt der Verteilung zu bestimmen. Hierbei ist der aktuelle Wert jeweils der zuvor gültige Wert der Wurfweite, welcher mittels der Messwerte des ersten Sensors bestimmt wurde. Hierbei kann es sich um einen Mittelwert aus mehreren Messwerten handeln. Bei der Fahrt aus dem Vorgewende in den Innenbereich ist zudem zu beachten, dass unmittelbar vor dem Einschalten des Verteilvorganges gar kein Streugut ausgebracht wird, so dass der hierbei gültige Wert der Wurfweite derjenige ist, der während oder zum Ende der Bearbeitung der zuvor befahrenen Fahrspur ermittelt wurde. Die Ein- und Ausschaltpunkte werden derart berechnet, dass eine möglichst wunschgemäße bzw. gleichmäßige Verteilung des Düngers im Übergangsbereich Vorgewende - Innenbereich der landwirtschaftlichen Fläche erreicht wird. Dies kann beispielsweise bedeuten, dass eine leichte Überlappung der Streubereiche vorgesehen ist, dass die Verteilung also derart aus- bzw. eingeschaltet wird, dass noch etwas Streugut in das Vorgewende bei der Bearbeitung des Innenbereiches der landwirtschaftlichen Fläche hineinfliegt.

Weitere vorteilhafte Ausgestaltungen sind den weiteren Unteransprüchen und der Figurenbeschreibung zu entnehmen. Hierbei zeigt
- Fig. 1: einen Schleuderstreuer und den Streufächer des verteilten Streugutes in schematischer Darstellung und
- Fig. 2: eine schematische Darstellung der Bearbeitung des Übergangsbereiches zwischen Vorgewende und Innenbereich der landwirtschaftlichen Fläche.

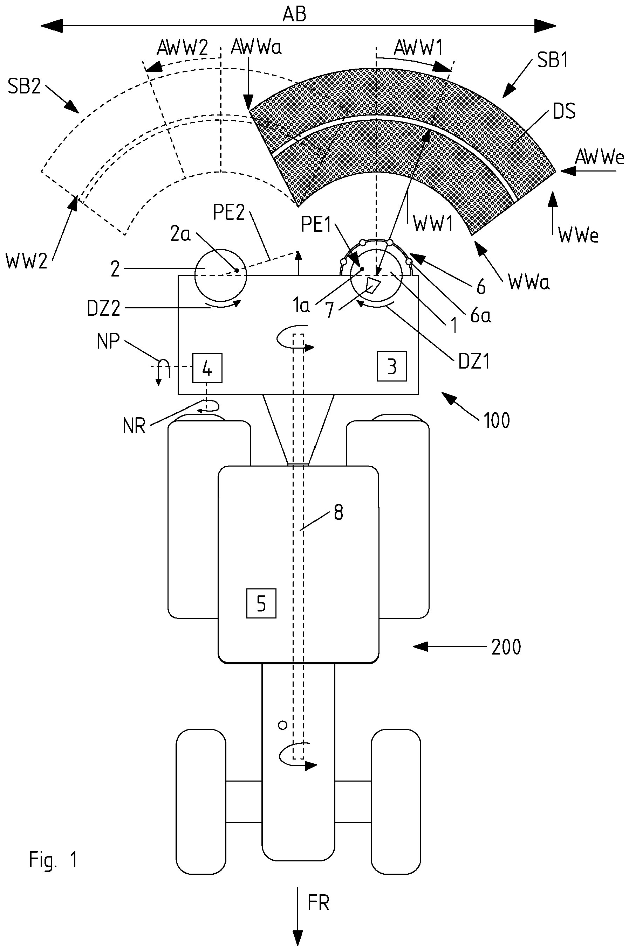

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1a gilt der gleiche Zusammenhang bezogen auf die Drehrichtung der ersten Streuscheibe 1.

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei hydraulischem Antrieb der Streuscheiben 1, 2 auch eine Anpassung ihrer Drehzahlen DZ1, DZ2. Bei mechanischem Antrieb der Streuscheiben 1, 2 werden die Drehzahlen DZ1, DZ2 beispielsweise von einem Schlepper 200 aus eingestellt.

Schematisch dargestellt ist ferner eine optionale Neigungsmesseinrichtung 4 zum Messen einer ersten Hangneigung NP in Fahrtrichtung FR und einer zweiten Hangneigung NR orthogonal zur Fahrtrichtung FR.

Ferner ist ein Steuersystem umfassend eine Bedienstation 5, beispielsweise in Form eines Bordrechners oder eines mobilen Rechners, im Bereich eines mit dem Schleuderstreuer 100 verbundenen Schleppers 200 dargestellt. Das Steuersystem und/oder die Bedienstation 5 kann auch am Schleuderstreuer 100 angeordnet sein. Die Bedienstation 5 dient zur Anzeige von Maschinenparametern des Schleuderstreuers 100 und zur Eingabe von wenigstens einer Arbeitsbreite AB für den Düngeraustrag. Das Steuersystem umfasst vorzugsweise auch die Steuereinheit 3. Es kann ferner vorgesehen sein, die Konfiguration einer nicht dargestellten Grenzstreuvorrichtung und die auszubringende Düngermenge in das Steuersystem einzugeben. Die entsprechenden Daten können alternativ auch aus einer hinterlegten Bearbeitungskarte in Kombination mit einem nicht dargestellten Positionserfassungssystem positionsgenau ausgelesen werden.

Im nutzbaren Abwurfwinkelbereich der ersten Streuscheibe 1 ist ein Sensorsystem 6 zum Messen einer Abwurfwinkelverteilung im Wesentlichen quer zur Fahrtrichtung FR ausgebildet. Das Sensorsystem 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise anhand der Amplitude des ermittelten Dopplersignals, um daraus einen Istwert des Abwurfwinkels AWW1 zu berechnen. Es wären hierzu prinzipiell auch andere Verfahren denkbar, die die weggeschleuderten Düngerteilchen beispielsweise optisch überwachen.

Zusätzlich ist im Bereich der ersten Schleuderscheibe 1 ein Sensor 7 zum Messen einer Wurfweiteverteilung des Düngeraustrags schematisch angedeutet. Auch der Sensor 7 sendet wenigstens eine Radarkeule aus und detektiert die von den Düngerteilchen reflektierten Radarwellen auf bekannte Weise. Daraus lässt sich beispielsweise ein Istwert der Wurfweite WW1 berechnen. Auch an dieser Stelle wären andere Verfahren denkbar, die die weggeschleuderten Düngerteilchen beispielsweise optisch überwachen.

Im Unterschied zu dem Sensorsystem 6, welches in der Nähe der Schleuderscheibe 1 angeordnet ist und das abgeworfene Streugut annähernd senkrecht von unten oder oben mittels Radarstrahlen vermisst, ist der Sensor 7 weiter oben am Schleuderstreuer 100 angeordnet und vermisst das abgeworfene Streugut in größerer Entfernung, vorzugsweise mehr als 2 m, von der Schleuderscheibe 1. Das abgeworfene Streugut wird mit Radarstrahlen beaufschlagt, aus deren Reflexion sich in an sich bekannter Weise mittels der Frequenz des ermittelten Dopplersignals die Geschwindigkeit der Streugutpartikel ermitteln lässt. In der größeren Entfernung von der Schleuderscheibe entfalten die Flugeigenschaften der Streugutpartikel bereits einen Einfluss auf die Bewegung, insbesondere die Geschwindigkeit der Partikel, sodass eine Prognose der Wurfweite WW1 möglich ist. Die für die Schleuderscheibe 1 dargestellten Sensoren bzw. Sensorsystem 6, 7 können in analoger Weise auch für die Schleuderscheibe 2 vorgesehen sein.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 kann hydraulisch sein oder mechanisch mittels einer angedeuteter Zapfwelle oder dergleichen. Im Vorgewende und/oder in der Nähe von Feldgrenzen oder Hindernissen können die Streuscheiben 1, 2 auch mit unterschiedlichen Drehzahlen DZ1, DZ2 betrieben werden. Weitere Situationen, beispielsweise bei Seitenwind oder bei der Fahrt am Hang, sind denkbar in denen die Drehzahlen DZ1 und DZ2 unterschiedliche Werte annehmen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1a, 2a und damit die Aufgabepunkte des Düngers auf die jeweilige Schleuderscheibe daher unabhängig voneinander einstellbar.

Hierbei ist der Sollwert des Abwurfwinkels insbesondere abhängig von der jeweiligen mittels des ersten Sensorsystems 7 bestimmten tatsächlichen Wurfweite in der Weise, dass bei der aktuellen Wurfweite der Sollwert für den Abwurfwinkel so eingestellt wird, dass die tatsächliche Arbeitsbreite dem vorgegebenen Sollwert für die Arbeitsbreite entspricht. Alternativ oder zusätzlich kann in Grenzen auch die Drehzahl der Schleuderscheiben erhöht werden, um eine größere Arbeitsbreite zu erreichen. Die Einstellung der Regelparameter, insbesondere Abwurfwinkel bzw. Aufgabepunkt einerseits und Drehzahl der jeweiligen Schleuderscheibe andererseits wird entsprechend in dem Steuersystem hinterlegter Tabellen oder Algorithmen vorgenommen.

Hierbei kann es verschiedene Kombinationen von Regelparametern geben, die zur Einstellung derselben Arbeitsbreite führen. Die Wahl der Kombination von Regelparametern wird dann beispielsweise dadurch bestimmt, welche Verteilcharakteristik des Schleuderstreuers für die Bearbeitung besonders vorteilhaft ist. Hierbei wird unterschieden zwischen einer eher trapezförmigen Ausbringmenge mit steil abfallenden Schenkeln des Trapezes von der befahrenen Fahrspur in Richtung der benachbarten Fahrspuren betrachtet und einer eher dreiecksförmigen Verteilung mit einem Maximum der Ausbringmenge in der Nähe der befahrenen Fahrspur und flach abfallenden Schenkeln in Richtung der benachbarten Fahrspuren. Letztere Verteilung ist vorteilhaft, da beispielsweise kleine Fahrfehler bei der Bearbeitung nur zu kleinen lokalen Verschiebungen zwischen der idealen und der tatsächlichen Ausbringmenge führen, während durch die steil abfallenden Schenkel bei einem trapezförmigen Verlauf der Ausbringmenge, kleine Fahrfehler zu vergleichsweise großen Abweichungen der lokal ausgebrachten Streugutmenge von der Sollausbringmenge führen.

Eine dreiecksförmige Verteilcharakteristik wird durch eher große Drehzahlen DZ1, DZ2 der Schleuderscheiben und kleine Abwurfwinkel AWW1, AWW2 erreicht, während eine trapezförmige Verteilcharakteristik umgekehrt durch vergleichsweise kleine Drehzahlen DZ1, DZ2 und große Abwurfwinkel AWW1, AWW2 erreicht wird.

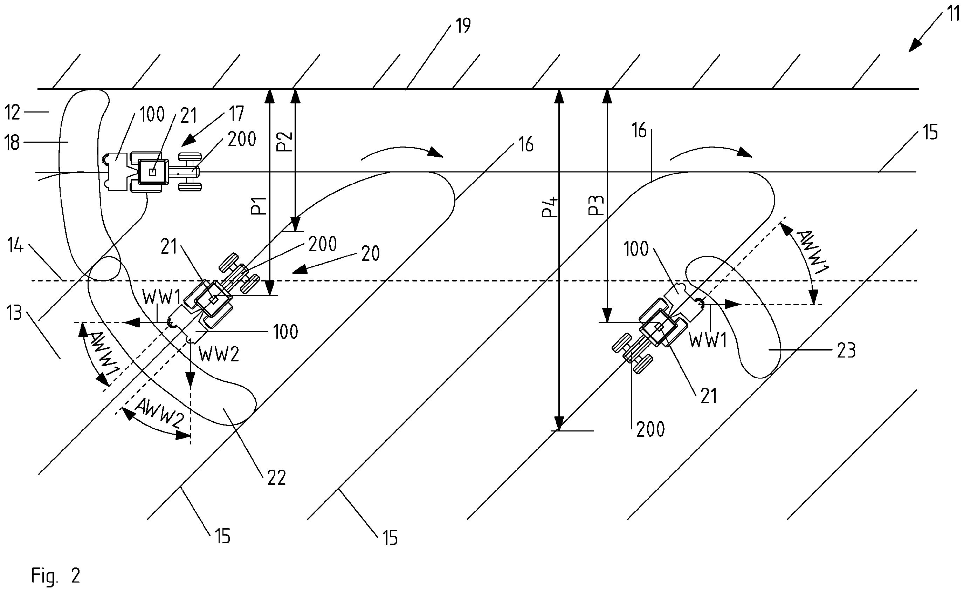

In Fig. 2 schematisch dargestellt ist die Bearbeitung einer landwirtschaftlichen Fläche 11 mittels eines Schleuderstreuers im Übergangsbereich von Vorgewende 12 und dem Innenbereich 13 des Feldes, wobei beide Bereiche durch die gestrichelte Linie 14 getrennt sind. Zudem sind die zu befahrenden Fahrspuren 15 dargestellt, wobei in diesem Beispiel die Bearbeitungsspuren des Innenbereiches schräg in das Vorgewende 12 hineinlaufen. Es ist ebenso möglich, das die Fahrspuren senkrecht auf den Vorgewendebereich 12 treffen. Die Fahrspuren zur Bearbeitung des Feldinneren sind jeweils verbunden durch eine Wendespur 16 im Bereich des Vorgewendes 12, entlang welcher die Verteilmaschine gewendet und die benachbarte Fahrspur anschließend in entgegengesetzter Richtung bearbeitet wird (durch Pfeile angedeutet).

Die für den Verteilprozess vorgesehene Verteilmaschine 100 ist ausgebildet als getragener Schleuderstreuer und angebaut an einen Traktor 200 in der Fig. 2 dargestellt jeweils in unterschiedlichen Phasen des Bearbeitungsvorganges der landwirtschaftlichen Fläche 11. Zunächst ist der Schleuderstreuer an Position 17 bei der Bearbeitung des Vorgewendes zu erkennen. Die Bearbeitung des Vorgewendes 12 kann vor oder nach der Bearbeitung des restlichen Feldes 13 stattfinden. Die dargestellte flächige Verteilung des Streugutes 18 ist auf Grund der Nähe zur Feldgrenze 19 asymmetrisch ausgebildet. Dies ist notwendig um durch nur einmaliges Bearbeiten in dem Bereich zwischen Vorgewendefahrspur und Feldgrenze 19 zumindest annähernd die gewünschte Streugutmenge auszubringen und wird erreicht, indem ein spezieller Grenzstreuschirm und/oder eine spezielle auf der Schleuderscheibe angeordnete Streuschaufel und/oder eine spezielle Streuschaufelposition verwendet wird. Diese Maßnahme kann durch eine Reduktion der Schleuderscheibendrehzahl und/oder eine Reduktion der Ausbringmenge an Streugut ergänzt werden.

Der Bereich zwischen Vorgewendefahrspur und der Trennlinie 14 wird derart bearbeitet, dass im Übergangsbereich in Kombination mit der Bearbeitung der Fahrspuren des Innenbereiches des Feldes eine möglichst gleichmäßige Ausbringmenge erreicht wird. Dies kann bedeuten, dass beispielsweise wie in Fig. 2 dargestellt ist, der Streufächer 18 des Schleuderstreuers bei der Bearbeitung des Vorgewendes möglichst an die Linie 14 heranreicht, leicht darüber hinausragt oder auch, dass ein Abstand zwischen der Begrenzung 18 des Streufächers und der Trennlinie 14 verbleibt. Hierbei ist zu betonen, dass eine scharfe Abgrenzung des Streufächers 18 in der Regel nicht ohne weiteres möglich ist, da durch die abnehmende Ausbringrate zu den Rändern des Streufächers ein sehr allmähliches Abnehmen zu beobachten ist. Die gewünschte Überlappung der Streubereiche bei der Bearbeitung von Vorgewende 12 und Feldinnerem 3 werden daher in der Regel durch Simulationen und/oder Feldversuche ermittelt.

Bei der Bearbeitung des Innenbereiches des Feldes wird nun im Bereich der Position 20 beim Übergang vom Innenbereich 13 des Feldes in das Vorgewende 12 die Abschaltung der Verteilung erfolgen. Hierfür ist vorgesehen, dass der Schleuderstreuer 100 über einen ersten Sensor oder ein erstes Sensorsystem zur Erfassung der Wurfweite pro Schleuderscheibe WW1, WW2 und einen zweiten Sensor bzw. ein zweites Sensorsystem zur Bestimmung des Abwurfwinkels pro Schleuderscheibe AWW1, AWW2 verfügt, so dass die Verteilung für die jeweilige Schleuderscheibe individuell abgeschaltet werden kann, um im Übergangsbereich zwischen Vorgewende 12 und Feldinnerem 13 eine möglichst homogene Verteilung von Streugut zu erreichen.

Hierfür ist vorgesehen, dass aus der vor dem Abschalten ermittelten Wurfweite WW1, WW2 für jede Schleuderscheibe durch das erfindungsgemäße Steuersystem, welches am Schleuderstreuer 100 oder an dem Schlepper 200 angeordnet sein kann, der optimale Abschaltpunkt berechnet wird. Es wird also die gewünschte Abschaltposition für die Verteilung jeder Schleuderscheibe P1 und P2 durch das Steuersystem berechnet. Zu diesem Zweck ist ein Positionserfassungssystem 21 an dem Schleuderstreuer 100 oder dem Schlepper 200 montiert und durch das Steuersystem auslesbar und der Abstand bzw. die Lage jeder Schleuderscheibe relativ zu dem Positionserfassungssystem ist in dem Steuersystem hinterlegt. Im vorliegenden Fall werden die Abschaltpunkte P1 und P2 derart gewählt, dass der Streufächer 22 unmittelbar vor dem Abschalten der in Fahrtrichtung gesehen linken Schleuderscheibe an der Position P1 leicht in das Vorgewende 12 hineinragt. Entsprechend erstreckt sich der nicht dargestellte Reststreufächer der allein durch das Ausstreuen mittels der in Fahrtrichtung gesehen rechten Streuscheibe gebildet wird unmittelbar vor dem Abschalten an der Position P2 ebenfalls leicht in das Vorgewende 12 hinein.

Alternativ kann vorgesehen sein nur einen Abschaltpunkt zu berechnen, an dem beide Schleuderscheiben gleichzeitig abgeschaltet werden. Ebenfalls kann alternativ vorgesehen sein, dass je nach Streucharakteristik ein früheres oder späteres Abschalten vorteilhaft ist. Die entsprechenden Kriterien sind in Berechnungsalgorithmen oder Tabellen in dem Steuersystem hinterlegt. Auch kann vorgesehen sein, dass vor dem gänzlichen Abschalten der Verteilung auf der dem Vorgewende zugewandten Seite die Arbeitsbreite sukzessive, beispielsweise durch Reduktion der Schleuderscheibendrehzahl und/oder Verringerung des Abwurfwinkels und/oder Verringerung der Ausbringmenge an die jeweilige Einfahrsituation ins Vorgewende angepasst wird. Auf der dem Vorgewende abgewandten Seite könnte entsprechend vor dem gänzlichen Abschalten der Verteilung der Streufächer durch Erhöhen der Drehzahl und/oder Erhöhen des mittleren Abwurfwinkels und/oder Reduktion der Ausbringmenge an die Einfahrsituation ins Vorgewende angepasst werden und die Verteilung so optimiert werden. Bei der Ausfahrt aus dem Vorgewende stellt sich die Situation bzgl. des Einschaltens der Verteilung entsprechend umgekehrt dar.

Nach dem Wendevorgang im Bereich der Wendespur 16 erfolgt ein Anschalten der Verteilung zunächst auf der dem Vorgewende 12 abgewandten Seite. Die Darstellung in Fig. 2 ist hierbei der Übersichtlichkeit derart gewählt, dass der Einschaltvorgang anhand des Befahrens einer benachbarten Fahrspur 15 beschrieben wird, hier also an der in Fahrtrichtung gesehen linken Seite des Schleuderstreuers an der Position P3. Wiederum ist der hier dargestellte Reststreufächer der einen Schleuderscheibe unmittelbar nach dem Anschalten der Verteilung derart ausgebildet, dass eine leichte Überlappung der Streubereiche 23 und 18 zu einer möglichst gleichmäßigen Verteilung im Übergangsbereich von Vorgewende 12 und Innenbereich der landwirtschaftlichen Fläche 13 führt. An Position P4 wird dann in analoger Weise die zweite, in Fahrtrichtung gesehen rechte Schleuderscheibe zugeschaltet. Zur Berechnung der Einschaltpunkte an den Positionen P3 und P4 durch das Steuersystem wird die zuvor vor dem Abschalten für die jeweilige Schleuderscheibe durch das Steuersystem ermittelte mittlere Wurfweite verwendet.

## Patentansprüche

1. Steuersystem für einen Schleuderstreuer (100) zur Ausbringung von landwirtschaftlichem Gut, vorzugsweise Dünger, wobei der Schleuderstreuer (100) über einen Behälter zur Aufbewahrung des Gutes verfügt, wobei das Gut mittels zumindest einer Schleuderscheibe (1,2) in Breitverteilung ausgebracht wird, wobei die Drehzahl (DZ1, DZ2) der Schleuderscheibe (1, 2) in regelbarer Weise anpassbar ist, wobei die auszubringende Menge des Guts mittels eines Dosierorgans, vorzugsweise eines Dosierschiebers, in regelbarer Weise der zumindest einen Schleuderscheibe (1, 2) zuführbar ist, wobei vorzugsweise zudem der Aufgabepunkt (PE1, PE2) des Düngers auf die zumindest eine Schleuderscheibe (1, 2) in regelbarer Weise anpassbar ist, wobei der Schleuderstreuer (100) über zumindest einen ersten Sensor (7) zur berührungslosen Erfassung der Wurfweite (WW1, WW2) und zumindest einen zweiten Sensor (6) zur berührungslosen Charakterisierung mindestens eines Parameters der Verteilcharakteristik, wie vorzugsweise Wurfrichtung und/oder Arbeitsbreite (AB), des Schleuderstreuers (100) verfügt, wobei der zumindest eine erste Sensor (7) im oberen Bereich des Schleuderstreuers (100) angebracht ist und die abgeworfenen Streugutpartikel mit Radarstrahlen bestrahlt und der zumindest eine zweite Sensor (6) in der Nähe der Schleuderscheiben angeordnet ist und den Streufächer von unten oder oben mit Radarstrahlen beaufschlagt, und wobei in das Steuersystem eine gewünschte Arbeitsbreite des Schleuderstreuers (100) als Sollwert übergeben und/oder in dieses eingegeben wird, und wobei das Steuersystem konfiguriert ist, Regelparameter die Verteilung betreffend, wie Drehzahl (DZ1, DZ2) der Schleuderscheibe und/oder einen Sollwert für den mittleren Abwurfwinkel des Streugutes von der Schleuderscheibe (1, 2) in Reaktion auf die Messsignale des zumindest einen ersten Sensors (7) und der gewünschten Arbeitsbreite anzupassen, und auf der Basis der Messwerte des zweiten Sensors den Aufgabepunkt (PE1, PE2) des Streugutes auf die Schleuderscheibe (1,2) in der Weise anzupassen, dass der mittels der Messwerte des ersten Sensors (7) bestimmte Sollwert für den mittleren Abwurfwinkel eingestellt wird.

2. Steuersystem nach Anspruch 1, wobei das Steuersystem über ein Positionserfassungssystem (21) verfügt, wobei bei der Verteilung zwischen einem Innenbereich der landwirtschaftlichen Fläche (13) und zumindest einem äußeren Bereich (12), dem sogenannten Vorgewende, unterschieden wird, wobei letzterer für den Wendevorgang zwischen der Bearbeitung von zwei im Innenbereich liegenden Fahrspuren (15) verwendet wird, wobei die Bearbeitung zumindest eines Bereiches des Vorgewendes (12) vor oder nach der Bearbeitung des Innenbereiches (13) stattfindet, **dadurch gekennzeichnet, dass** das Steuersystem konfiguriert ist, die Positionen (P1, P2) an denen die Verteilung bei der Fahrt ins Vorgewende (12) vor oder zu Beginn des Wendevorganges gestoppt (Ausschaltpunkte) und die Positionen (P3, P4) an denen die Verteilung bei der Fahrt aus dem Vorgewende (12) nach oder zum Ende des Wendevorganges wieder gestartet wird (Einschaltpunkte) auf der Basis der jeweils vor dem Ausschalten mittels des zumindest einen Sensors ermittelten Wurfweite (WW1, WW2) zu bestimmen.

3. Steuersystem nach zumindest Anspruch 2, **dadurch gekennzeichnet, dass** die Ein- und/oder Ausschaltpunkte zusätzlich anhand der eingegebenen Sollarbeitsbreite und/oder anhand der tatsächlich mittels des ersten und/oder zweiten Sensors bestimmten Arbeitsbreite durch das Steuersystem ermittelt werden.

4. Steuersystem nach zumindest Anspruch 1, **dadurch gekennzeichnet, dass** der zumindest eine zweite Sensor (6) in der Nähe der Schleuderscheibe (1, 2) angeordnet ist und die abgeworfenen Düngerkörner in direkt nach dem Abwurf der Düngerkörner von der Schleuderscheibe (1, 2), vorzugsweise in einem Abstand von nicht mehr als 0,7 m von der Schleuderscheibe (1, 2), detektiert und der zumindest eine erste Sensor (7) an der Außenwand des Behälters in der oberen Hälfte angebracht ist und die Düngerkörner in einem weiteren Abstand von der Schleuderscheibe (1, 2) von vorzugsweise mehr als 2 m detektiert.

5. Steuersystem nach zumindest einem der Ansprüche 1 - 4, **dadurch gekennzeichnet, dass** zusätzlich der Schleuderscheibentyp an das Steuersystem übergebbar und/oder in dieses eingebbar ist und dieser bei der Ermittlung der Einstellparameter durch das Steuersystem berücksichtigt wird.

6. Steuersystem nach zumindest einem der Ansprüche 1 - 5, **dadurch gekennzeichnet, dass** der Schleuderscheibentyp mittels zumindest eines dritten Sensors, vorzugsweise berührungslos, ermittelt wird und dieser bei der Ermittlung der Einstellparameter durch das Steuersystem berücksichtigt wird.

7. Steuersystem nach zumindest einem der Ansprüche 1 - 6, **dadurch gekennzeichnet, dass** die aktuelle Ausbringmenge mittels zumindest eines vierten Sensors separat und/oder ergänzend ermittelt wird, vorzugsweise mittels einer Wiegeeinrichtung zur Bestimmung der im Behälter befindlichen Düngermasse und/oder eines Sensors zur Messung des zum Antrieb der Schleuderscheibe (1, 2) notwendigen Drehmomentes und die Ausbringmenge bei der Ermittlung der Einstellparameter durch das Steuersystem berücksichtigt wird.

8. Steuersystem nach zumindest einem der Ansprüche 1 - 7, **dadurch gekennzeichnet, dass** der Windeinfluss auf die Düngerverteilung mittels eines separaten fünften Sensors bestimmt und/oder die Einstellparameter entsprechend des Windeinflusses durch das Steuersystem angepasst wird.

9. Verfahren zur Steuerung eines Schleuderstreuers (100) zur Ausbringung von landwirtschaftlichem Gut, wobei das Gut mittels zumindest einer Schleuderscheibe (1, 2) in Breitverteilung ausgebracht wird, wobei die Drehzahl (DZ1, DZ2) der Schleuderscheibe (1, 2) in regelbarer Weise anpassbar ist, wobei die auszubringende Menge des Guts in regelbarer Weise der zumindest einen Schleuderscheibe (1, 2) zuführbar ist, wobei vorzugsweise zudem der Aufgabepunkt (PE1, PE2) des Düngers auf die zumindest eine Schleuderscheibe (1, 2) in regelbarer Weise anpassbar ist, wobei der Schleuderstreuer (100) über zumindest einen ersten Sensor (7) zur berührungslosen Erfassung der Wurfweite (WW1, WW2) und zumindest einen zweiten Sensor (6) zur berührungslosen Charakterisierung mindestens eines Parameters der Verteilcharakteristik, wie vorzugsweise Wurfrichtung und/oder Arbeitsbreite (AB), des Schleuderstreuers (100) verfügt, wobei der zumindest eine zweite Sensor (6) in der Nähe der Schleuderscheibe (1, 2) angeordnet ist und die abgeworfenen Düngerkörner direkt nach dem Abwurf der Düngerkörner von der Schleuderscheibe (1, 2) detektiert werden und der erste Sensor (7) weiter oben am Schleuderstreuer (100) angebracht ist und die Düngerpartikel derselben Schleuderscheibe (1, 2) zu einem späteren Zeitpunkt der Flugbewegung mit Radarstrahlen beaufschlagt werden, und wobei in das Steuersystem eine gewünschte Arbeitsbreite des Schleuderstreuers (100) als Sollwert übergeben und/oder in dieses eingegeben wird, und wobei Regelparameter die Verteilung betreffend, wie Drehzahl (DZ1, DZ2) der Schleuderscheibe (1, 2) und/ oder ein Sollwert für den mittleren Abwurfwinkel des Streugutes von der Streuscheibe in Reaktion auf die Messsignale des zumindest einen ersten Sensors (7) und der gewünschten Arbeitsbreite angepasst werden, und auf der Basis der Messwerte des zweiten Sensors (6) der Aufgabepunkt (PE1, PE2) des Streugutes auf die Schleuderscheibe (1, 2) in der Weise angepasst wird, dass der mittels der Messwerte des ersten Sensors (7) bestimmte Sollwert für den mittleren Abwurfwinkel eingestellt wird.

10. Verfahren nach Anspruch 9, wobei bei der Verteilung zwischen einem Innenbereich (13) der landwirtschaftlichen Fläche und zumindest einem äußeren Bereich (12), dem sogenannten Vorgewende unterschieden wird, wobei letzterer für den Wendevorgang zwischen der Bearbeitung von zwei im Innenbereich liegenden Fahrspuren (15) verwendet wird, wobei die Bearbeitung zumindest eines Bereiches des Vorgewendes (12) vor oder nach der Bearbeitung des Innenbereiches (13) stattfindet, **dadurch gekennzeichnet, dass** die Positionen (P1, P2) an denen die Verteilung bei der Fahrt ins Vorgewende (12) vor oder zu Beginn des Wendevorganges gestoppt (Ausschaltpunkte) und die Positionen (P3, P4) an denen die Verteilung bei der Fahrt aus dem Vorgewende (12) nach oder zum Ende des Wendevorganges wieder gestartet wird (Einschaltpunkte) auf der Basis der jeweils vor dem Ausschalten mittels des zumindest einen ersten Sensors (7) ermittelten Wurfweite (WW1, WW2) unter Zugriff auf Daten eines Positionserfassungssystems (21) bestimmt werden.

11. Verfahren nach zumindest Anspruch 10, **dadurch gekennzeichnet, dass** die Ein- und/oder Ausschaltpunkte zusätzlich anhand der eingegebenen Sollarbeitsbreite und/oder anhand der tatsächlich mittels des ersten und/oder zweiten Sensors bestimmten Arbeitsbreite ermittelt werden.

12. Verfahren nach zumindest Anspruch 9, **dadurch gekennzeichnet, dass** der zumindest eine zweite Sensor (6) als Radarsensor ausbildet ist und zumindest einen Parameter der Verteilcharakteristik mittels der Auswertung der Amplitude eines gemessenen Dopplersignals bestimmt und der zumindest eine erste Sensor (7) als Radarsensor ausgebildet ist und die Wurfweite mittels der Auswertung der aus der Dopplerfrequenz ermittelten Geschwindigkeit des Streugutes bestimmt.

13. Verfahren zumindest einem der Ansprüche 9-12, **dadurch gekennzeichnet, dass** zusätzlich der Schleuderscheibentyp bei der Ermittlung der Einstellparameter berücksichtigt wird.

14. Verfahren nach zumindest einem der Ansprüche 9-13, **dadurch gekennzeichnet, dass** zusätzlich die aktuelle Ausbringmenge separat bestimmbar ist und bei der Ermittlung der Einstellparameter berücksichtigt wird.

15. Verfahren nach zumindest einem der Ansprüche 9-14, **dadurch gekennzeichnet, dass** der Windeinfluss auf die Düngerverteilung bestimmbar ist und durch Anpassung der entsprechenden Einstellparameter berücksichtigt wird.

## Claims

1. Control system for a centrifugal spreader (100) for discharging agricultural material, preferably fertilizer, wherein the centrifugal spreader (100) has a container for storing the material, wherein the material is discharged in a width distribution by means of at least one centrifugal disc (1, 2), wherein the rotational speed (DZ1, DZ2) of the centrifugal disc (1, 2) can be adapted in a controllable fashion, wherein the quantity of the material which is to be discharged can be fed in a controllable fashion to the at least one centrifugal disc (1, 2) by means of a metering element, preferably a metering slide, wherein the application point (PE1, PE2) of the fertilizer onto the at least one centrifugal disc (1, 2) can additionally preferably be adapted in a controllable fashion, wherein the centrifugal spreader (100) has at least one first sensor (7) for contactless detection of the throwing width (WW1, WW2) and at least one second sensor (6) for contactless characterization of at least one parameter of the distribution characteristic, such as preferably the throwing direction and/or working width (AB), of the centrifugal spreader (100), wherein the at least one first sensor (7) is mounted in the upper region of the centrifugal spreader (100), and the ejected particles of spreading material are irradiated with radar beams, and the at least one second sensor (6) is arranged in the vicinity of the centrifugal discs and applies radar beams from below or from above onto the spreading fans, and wherein a desired working width of the centrifugal spreader (100) is transferred as a target value into the control system and/or is input therein, and wherein the control system is configured to adapt control parameters relating to the distribution, such as the rotational speed (DZ1, DZ2) of the centrifugal disc and/or a target value for the average ejection angle of the spreading material from the centrifugal disc (1, 2) in reaction to the measurement signals of the at least one first sensor (7) and of the desired working width, and to adapt the application point (PE1, PE2) of the spreading material onto the centrifugal disc (1, 2) on the basis of the measurement values of the second sensor in such a way that the target value, determined by means of the measurement values of the first sensor (7) for the average ejection angle is set.

2. Control system according to Claim 1, wherein the control system has a position-detecting system (21), wherein during the distribution a differentiation is made between an inner region of the agricultural area (13) and at least one outer region (12), the so-called headland, wherein the latter is used for the turning process between the working of two lanes (15) located in the inner region, wherein the working of at least one region of the headland (12) takes place before or after the working of the inner region (13), **characterized in that** the control system is configured to determine the positions (P1, P2) at which the distribution during the travel into the headland (12) is stopped before or at the start of the turning process (switch-off points) and the positions (P3, P4) at which the distribution during the travel out of the headland (12) is started again after or at the end of the turning process (switch-on points), on the basis of the throwing width (WW1, WW2) which is respectively acquired by means of the at least one sensor before the switching off process.

3. Control system according to at least Claim 2, **characterized in that** the switch-on and/or switch-off points are additionally acquired by the control system on the basis of the input target working width and/or on the basis of the working width which is actually determined by means of the first and/or second sensor.

4. Control system according to at least Claim 1,
**characterized in that**
the at least one second sensor (6) is arranged in the vicinity of the centrifugal disc (1, 2) and the ejected particles of fertilizer are detected directly after the ejection of the particles of fertilizer from the centrifugal disc (1, 2), preferably at a distance of not more than 0.7 m from the centrifugal disc (1, 2), and the at least one first sensor (7) is attached to the outer wall of the container in the upper half and detects the particles of fertilizer at a larger distance from the centrifugal disc (1, 2) of preferably more than 2 m.

5. Control system according to at least one of Claims 1 - 4, **characterized in that** the type of centrifugal disc can additionally be transferred to the control system and/or can be input therein and this type of centrifugal disc is taken into account by the control system during the acquisition of the setting parameters.

6. Control system according to at least one of Claims 1 - 5, **characterized in that** the type of centrifugal disc is acquired by means of at least one third sensor, preferably in a contactless fashion, and this type of centrifugal disc is taken into account by the control system during the acquisition of the setting parameters.

7. Control system according to at least one of Claims 1 - 6, **characterized in that** the current discharge quantity is acquired separately and/or additionally by means of at least one fourth sensor, preferably by means of a weighing device for determining the mass of fertilizer located in the container and/or of a sensor for measuring the torque which is necessary to drive the centrifugal disc (1, 2), and the discharge quantity is taken into account by the control system during the acquisition of the setting parameters.

8. Control system according to at least one of Claims 1 - 7, **characterized in that** the influence of the wind on the distribution of fertilizer by means of a separate fifth sensor is determined and/or the setting parameters are adapted by the control system in accordance with the influence of the wind.

9. Method for controlling a centrifugal spreader (100) for discharging agricultural material, wherein the material is discharged in a width distribution by means of at least one centrifugal disc (1, 2), wherein the rotational speed (DZ1, DZ2) of the centrifugal disc (1, 2) can be adapted in a controllable fashion, wherein the quantity of the material which is to be discharged can be fed in a controllable fashion to the at least one centrifugal disc (1, 2), wherein the application point (PE1, PE2) of the fertilizer onto the at least one centrifugal disc (1, 2) can additionally preferably be adapted in a controllable fashion, wherein the centrifugal spreader (100) has at least one first sensor (7) for contactless detection of the throwing width (WW1, WW2) and at least one second sensor (6) for contactless characterization of at least one parameter of the distribution characteristic, such as preferably the throwing direction and/or working width (AB), of the centrifugal spreader (100), wherein the at least one second sensor (6) is arranged in the vicinity of the centrifugal disc (1, 2), and the ejected particles of fertilizer are detected directly after the ejection of the particles of fertilizer from the centrifugal disc (1, 2), and the first sensor (7) is mounted further up on the centrifugal spreader (100) and radar beams are applied to the particles of fertilizer of the same centrifugal disc (1, 2) at a later time in the flight movement, and wherein a desired working width of the centrifugal spreader (100) is transferred as a target value into the control system and/or is input therein, and wherein control parameters relating to the distribution, such as rotational speed (DZ1, DZ2) of the centrifugal disc (1, 2) and/or a target value for the average ejection angle of the spreading material from the spreading disc are adapted in reaction to the measurement signals of the at least one first sensor (7) and of the desired working width, and the application point (PE1, PE2) of the spreading material onto the centrifugal disc (1, 2) is adapted on the basis of the measurement values of the second sensor (6) in such a way that the target value, determined by means of the measurement values of the first sensor (7), for the average ejection angle is set.

10. Method according to Claim 9, wherein during the distribution a differentiation is made between an inner region (13) of the agricultural area and at least one outer region (12), the so-called headland, wherein the latter is used for the turning process between the working of two lanes (15) located in the inner region, wherein the working of at least one region of the headland (12) takes place before or after the working of the inner region (13), **characterized in that** the positions (P1, P2) on which the distribution is stopped (switch-off points) during the travel into the headland (12) before or at the start of the turning process and the positions (P3, P4) at which the distribution is started again (switch-on points) during the travel out of the headland (12) after or at the end of the turning process, are determined on the basis of the throwing width (WW1, WW2) respectively acquired by means of the at least one first sensor (7) before the switching off process, by accessing data of a position-detecting system (21).

11. Method according to at least Claim 10, **characterized in that** the switch-on and/or switch-off points are additionally acquired on the basis of the input target working width and/or on the basis of the working width which is actually determined by means of the first and/or second sensor.

12. Method according to at least Claim 9, **characterized in that** the at least one second sensor (6) is embodied as a radar sensor and determined at least one parameter of the distribution characteristic by means of the evaluation of the amplitude of a measured Doppler signal, and the at least one first sensor (7) is embodied as a radar sensor and determines the throwing width by means of the evaluation of the speed, acquired from the Doppler frequency, of the spreading material.

13. Method according to at least one of Claims 9 - 12, **characterized in that** the type of centrifugal disc is additionally taken into account during the acquisition of the setting parameters.

14. Method according to at least one of Claim 9 - 13, **characterized in that** the current discharge quantity can additionally be determined separately and is taken into account during the acquisition of the setting parameters.

15. Method according to at least one of Claims 9 - 14, **characterized in that** the influence of the wind on the distribution of fertilizer can be determined and is taken into account by adapting the corresponding setting parameters.

## Revendications

1. Système de commande pour une épandeuse centrifuge (100) destinée à épandre un produit agricole, de préférence de l'engrais, l'épandeuse centrifuge (100) disposant d'un réservoir pour conserver le produit, le produit étant épandu en distribution large au moyen d'au moins un disque centrifuge (1, 2), la vitesse de rotation (DZ1, DZ2) du disque centrifuge (1, 2) pouvant être adaptée de manière régulable, la quantité de produit à épandre pouvant être acheminée de manière régulable à l'au moins un disque centrifuge (1, 2) au moyen d'un organe de dosage, de préférence un curseur de dosage, le point de chute (PE1, PE2) de l'engrais pouvant en outre de préférence être adapté de manière régulable à l'au moins un disque centrifuge (1, 2), l'épandeuse centrifuge (100) disposant d'au moins un premier capteur (7) destiné à la détection sans contact de la largeur de projection (WW1, WW2) et d'au moins un deuxième capteur (6) destiné à la caractérisation sans contact d'au moins un paramètre de la caractéristique de distribution, comme de préférence le sens de projection et/ou la largeur de travail (AB) de l'épandeuse centrifuge (100), l'au moins un premier capteur (7) étant monté dans la zone supérieure de l'épandeuse centrifuge (100) et les particules de produit à épandre projetées étant irradiées avec des rayons radar et l'au moins un deuxième capteur (6) étant disposé à proximité des disques centrifuges et exposant les éventails d'épandage par le dessous ou le dessus aux rayons radar, et une largeur de travail souhaitée de l'épandeuse centrifuge (100) étant transférée en tant que valeur de consigne dans le système de commande et/ou saisie dans celui-ci, et le système de commande étant configuré pour adapter les paramètres de régulation qui concernent la distribution, tels que la vitesse de rotation (DZ1, DZ2) du disque centrifuge et/ou une valeur de consigne pour l'angle de projection moyen du produit à épandre depuis le disque centrifuge (1, 2) en réaction aux signaux de mesure de l'au moins un premier capteur (7) et de la largeur de travail souhaitée, et adapter le point de chute (PE1, PE2) du produit à épandre sur le disque centrifuge (1, 2) sur la base des valeurs mesurées du deuxième capteur de telle sorte que la valeur de consigne déterminées au moyen des valeurs mesurées du premier capteur (7) est réglée pour l'angle de projection moyen.

2. Système de commande selon la revendication 1, le système de commande disposant d'un système de détection de position (21), une distinction étant faite lors de la distribution entre une zone intérieure de la surface agricole (13) et au moins une zone extérieure (12), appelée le bout de champ, cette dernière étant utilisée pour la manoeuvre de retournement entre le traitement de deux bandes de circulation (15) qui se trouvent dans la zone intérieure, le traitement d'au moins une zone du bout de champ (12) ayant lieu avant ou après le traitement de la zone intérieure (13), **caractérisé en ce que** le système de commande est configuré pour définir les positions (P1, P2) auxquelles la distribution est arrêtée (points de mise à l'arrêt) lors du déplacement dans le bout de champ (12) avant ou au début de la manoeuvre de retournement et les positions (P3, P4) auxquelles la distribution est redémarrée (points de mise en marche) lors du déplacement hors du bout de champ (12) après ou à la fin de la manoeuvre de retournement sur la base de la largeur de projection (WW1, WW2) déterminée respectivement avant la mise à l'arrêt au moyen de l'au moins un capteur.

3. Système de commande selon au moins la revendication 2, **caractérisé en ce que** les points de mise en marche et/ou à l'arrêt sont en plus déterminés par le système de commande à l'aide de la largeur de travail de consigne saisie et/ou à l'aide de la largeur de travail effective, définie au moyen du premier et/ou du deuxième capteur.

4. Système de commande selon au moins la revendication 1, **caractérisé en ce que** l'au moins un deuxième capteur (6) est disposé à proximité du disque centrifuge (1, 2) et détecte les grains d'engrais projetés directement après la projection des grains d'engrais par le disque centrifuge (1, 2), de préférence à un écart maximal de 0,7 m du disque centrifuge (1, 2) et l'au moins un premier capteur (7) est monté au niveau de la paroi extérieure du réservoir dans la moitié supérieure et détecte les grains d'engrais à un écart plus grand du disque centrifuge (1, 2), de préférence supérieur à 2 m.

5. Système de commande selon au moins l'une des revendications 1 à 4, **caractérisé en ce que** le type de disque centrifuge peut en plus être transféré au système de commande et/ou saisi dans celui-ci et celui-ci est pris en compte par le système de commande lors de la détermination du paramètre de réglage.

6. Système de commande selon au moins l'une des revendications 1 à 5, **caractérisé en ce que** le type de disque centrifuge est déterminé au moyen d'au moins un troisième capteur, de préférence sans contact, et celui-ci est pris en compte par le système de commande lors de la détermination du paramètre de réglage.

7. Système de commande selon au moins l'une des revendications 1 à 6, **caractérisé en ce que** la quantité à épandre actuelle est déterminée séparément et/ou en complément au moyen d'au moins un quatrième capteur, de préférence au moyen d'un dispositif de pesage destiné à définir la masse d'engrais qui se trouve dans le réservoir et/ou d'un capteur destiné à mesurer le couple nécessaire pour entraîner le disque centrifuge (1, 2) et la quantité à épandre est prise en compte par le système de commande lors de la détermination du paramètre de réglage.

8. Système de commande selon au moins l'une des revendications 1 à 7, **caractérisé en ce que** l'influence du vent sur la distribution de l'engrais est définie au moyen d'un cinquième capteur séparé et/ou les paramètres de réglage sont adaptés par le système de commande en fonction de l'influence du vent.

9. Procédé de commande d'une épandeuse centrifuge (100) destinée à épandre un produit agricole, le produit étant épandu en distribution large au moyen d'au moins un disque centrifuge (1, 2), la vitesse de rotation (DZ1, DZ2) du disque centrifuge (1, 2) pouvant être adaptée de manière régulable, la quantité de produit à épandre pouvant être acheminée de manière régulable à l'au moins un disque centrifuge (1, 2), le point de chute (PE1, PE2) de l'engrais pouvant en outre de préférence être adapté de manière régulable à l'au moins un disque centrifuge (1, 2), l'épandeuse centrifuge (100) disposant d'au moins un premier capteur (7) destiné à la détection sans contact de la largeur de projection (WW1, WW2) et d'au moins un deuxième capteur (6) destiné à la caractérisation sans contact d'au moins un paramètre de la caractéristique de distribution, comme de préférence le sens de projection et/ou la largeur de travail (AB) de l'épandeuse centrifuge (100), l'au moins un deuxième capteur (6) étant disposé à proximité du disque centrifuge (1, 2) et les grains d'engrais projetés étant détectés directement après la projection des grains d'engrais depuis le disque centrifuge (1, 2) et le premier capteur (7) étant monté plus haut sur l'épandeuse centrifuge (100) et les particules d'engrais du même disque centrifuge (1, 2) étant exposées à des rayons radar à un moment ultérieur du mouvement de vol, et une largeur de travail souhaitée de l'épandeuse centrifuge (100) étant transférée en tant que valeur de consigne dans le système de commande et/ou saisie dans celui-ci, et les paramètres de régulation qui concernent la distribution, tels que la vitesse de rotation (DZ1, DZ2) du disque centrifuge (1, 2) et/ou une valeur de consigne pour l'angle de projection moyen du produit à épandre depuis le disque centrifuge en réaction aux signaux de mesure de l'au moins un premier capteur (7) et de la largeur de travail souhaitée, et le point de chute (PE1, PE2) du produit à épandre sur le disque centrifuge (1, 2) étant adapté sur la base des valeurs mesurées du deuxième capteur (6) de telle sorte que la valeur de consigne déterminées au moyen des valeurs mesurées du premier capteur (7) est réglée pour l'angle de projection moyen.

10. Procédé selon la revendication 9, une distinction étant faite lors de la distribution entre une zone intérieure (13) de la surface agricole et au moins une zone extérieure (12), appelée le bout de champ, cette dernière étant utilisée pour la manoeuvre de retournement entre le traitement de deux bandes de circulation (15) qui se trouvent dans la zone intérieure, le traitement d'au moins une zone du bout de champ (12) ayant lieu avant ou après le traitement de la zone intérieure (13), **caractérisé en ce que** les positions (P1, P2) auxquelles la distribution est arrêtée (points de mise à l'arrêt) avant ou au début de la manoeuvre de retournement lors du déplacement dans le bout de champ (12) et les positions (P3, P4) auxquelles la distribution est redémarrée (points de mise en marche) lors du déplacement hors du bout de champ (12) après ou à la fin de la manoeuvre de retournement sont définies sur la base de la largeur de projection (WW1, WW2) déterminée respectivement avant la mise à l'arrêt au moyen de l'au moins un premier capteur (7) en accédant aux données d'un système de détection de position (21).

11. Procédé selon au moins la revendication 10, **caractérisé en ce que** les points de mise en marche et/ou à l'arrêt sont en plus déterminés à l'aide de la largeur de travail de consigne saisie et/ou à l'aide de la largeur de travail effective, définie au moyen du premier et/ou du deuxième capteur.

12. Procédé selon au moins la revendication 9, **caractérisé en ce que** l'au moins un deuxième capteur (6) est réalisé sous la forme d'un capteur radar et définit au moins un paramètre de la caractéristique de distribution au moyen de l'interprétation de l'amplitude d'un signal Doppler mesurée et l'au moins un premier capteur (7) est réalisé sous la forme d'un capteur radar et définit la largeur de distribution au moyen de l'interprétation de la vitesse du produit à épandre déterminée à partir de la fréquence Doppler.

13. Procédé selon au moins l'une des revendications 9 à 12, **caractérisé en ce que** le type de disque centrifuge est en plus pris en compte lors de la détermination du paramètre de réglage.

14. Procédé selon au moins l'une des revendications 9 à 13, **caractérisé en ce que** la quantité à épandre actuelle peut en plus être définie séparément et elle est prise en compte lors de la détermination du paramètre de réglage.

15. Procédé selon au moins l'une des revendications 9 à 14, **caractérisé en ce que** l'influence du vent sur la distribution de l'engrais peut être définie et elle est prise en compte par adaptation du paramètre de réglage correspondant.
